# EUROPÄISCHE PATENTSCHRIFT

(11) **EP 2 704 802 B1**
(45) Veröffentlichungstag und Bekanntmachung des Hinweises auf die Patenterteilung: **25.07.2018**
(21) Anmeldenummer: 12718931.4
(22) Anmeldetag: 16.04.2012
(51) Int. Cl.: H01M 2/12, H01M 2/36, H01M 10/42, A62C 3/07, A62C 3/16, A62D 1/00, A62D 1/02, H01M 2/10

(54) **BATTERIEGEHÄUSE FÜR LITHIUM-IONEN-ZELLEN**
BATTERY HOUSING FOR LITHIUM-ION CELLS
BOÎTIER DE BATTERIE DESTINÉ À DES CELLULES LITHIUM-ION

(30) Priorität: 05.05.2011 DE 102011075318
(43) Veröffentlichungstag der Anmeldung: 12.03.2014
(73) Patentinhaber: Robert Bosch GmbH, 70442 Stuttgart (DE); Samsung SDI Co., Ltd., Yongin-si Gyeonggi-do 446-577 (KR)
(72) Erfinder: WOEHRLE, Thomas, 80807 Munich (DE); LEUTHNER, Stephan, 71229 Leonberg (DE)
(74) Vertreter: Bee, Joachim
(86) Internationale Anmeldenummer: PCT/EP2012/056864
(87) Internationale Veröffentlichungsnummer: WO 2012/150117

(56) Entgegenhaltungen:
- EP-A1- 1 806 807
- EP-A1- 2 104 159
- EP-A1- 2 159 894
- DE-A1- 4 012 549
- DE-B3- 10 257 191
- JP-A- 2005 332 700
- JP-A- 2008 251 263

## Beschreibung

Die vorliegende Erfindung betrifft ein Batteriegehäuse, insbesondere für Lithium-Ionen-Zellen, eine galvanische Zelle sowie eine Batterie.

### Stand der Technik

Lithium-Ionen-Zellen weisen eine positive Elektrode, die so genannte Kathode, und eine negative Elektrode, die sogenannte Anode, auf welche Lithium-Ionen reversibel ein- und wieder auslagern können, was auch als Interkalation beziehungsweise Deinterkalation bezeichnet wird. Eine spezielle Verpackungsform von Lithium-Ionen-Zellen wird als Lithium-Ionen-Polymer-Zellen beziehungsweise Lithium-Polymer-Zelle bezeichnet. Darunter versteht man Lithium-Ionen-Zellen, die in einer Aluminium-Verbundfolie verpackt sind; dies wird im technischen Sprachgebrauch auch als Pouch beziehungsweise Softpack bezeichnet.

Damit die Interkalation beziehungsweise Deinterkalation stattfindet, enthalten Lithium-Ionen-Zellen einen Elektrolyten. Praktisch bei allen derzeitigen Lithium-Ionen-Zellen sowohl im Kleingerätebereich, zum Beispiel bei Mobiltelefonen, MP3-Playern oder akkumulatorbetriebenen Werkzeugen, als auch im Automobilbereich, zum Beispiel bei Hybrid-Autos (HEV; Englisch: Hybrid Electric Vehicle), Plug-in-Hybrid-Autos (PHEV; Englisch: Plug-in Electric Vehicle) und Elektroautos (EV; Englisch: Electric Vehicle), bestehen diese Elektrolyten derzeit aus dem in einem organischen Lösungsmittel gelösten Leitsalz Lithiumhexafluorphosphat (LiPF₆). Als Lösungsmittel werden üblicherweise organische Carbonate, wie Ethylencarbonat (EC) und/oder Dimethylcarbonat (DMC), eingesetzt. Diese organischen Lösungsmittelkomponenten im Elektrolyten sind jedoch brennbar. Zudem können insbesondere leicht flüchtige Lösungsmittel mit Luft beziehungsweise Sauerstoff auch zünden oder sogar explosionsfähige Gemenge bilden.

Beispielsweise beim Überladen, bei einer Beschädigung der Zellenverpackung oder bei einem unbeabsichtigten internen oder externen Kurzschluss können sich Lithium-Ionen-Zellen mehr oder weniger heftig erwärmen und unter Öffnung der Zellenverpackung gasförmige, flüssige oder aerosolförmige Zellkomponenten freisetzen. Die Zellkomponenten können dabei sowohl unzersetzte brennbare Zellkomponenten, zum Beispiel Elektrolytlösungsmittel, als auch brennbare Zersetzungsprodukte, wie Kohlenmonoxid (CO), Wasserstoff (H₂) oder Methan (CH₄) sein.

Die Druckschrift DE 10 2008 059 948 A1 beschreibt ein Verfahren und eine Vorrichtung zur Brandprävention und/oder -bekämpfung für eine Lithium-Ionen-Batterie, bei denen zeitweilig ein Löschmittel aus einem außerhalb des Batteriegehäuses angeordneter Löschmittelspeicher über eine Notfallleitung in den Innenraum der Batterie einleitbar ist.

Weitere Anordnungen gemäß dem Oberbegriff des Anspruchs 1 welche Löschmittel innerhalb eines Batteriegehäuses zur Verfügung stellen sind aus den Veröffentlichungen JP 2008 251263 A, EP 1 806 807 A1 and EP 2 159 894 A1 bekannt.

### Offenbarung der Erfindung

Gegenstand der vorliegenden Erfindung ist ein Batteriegehäuse gemäß Anspruch 1 mit einem Innenraum zur Aufnahme von galvanischen Zellen, insbesondere Lithium-Ionen-Zellen, welche mit mindestens einer im Versagensfall der Zelle öffenbaren Ausbruchsstelle ausgestattet sind.

Erfindungsgemäß weist der Innenraum des Batteriegehäuse mindestens einen Spender zum Spenden eines flammeninhibierenden, -hemmenden und/oder - löschenden, insbesondere flammeninhibierenden- und/oder -hemmenden, Mittels auf, welcher mindestens eine zu einer Ausbruchsstelle einer Zelle benachbart anordbare oder angeordnete, öffenbare Spenderöffnung aufweist, wobei die Spenderöffnung bei einem mechanischen Schock und/oder einer Temperaturerhöhung und/oder einem Druckanstieg oberhalb eines vorbestimmten Grenzwertes öffenbar ist.

Der Spender kann so vorteilhafterweise im Gefahrfall, welcher herkömmlicherweise mit einem mechanischen Schock, einer Temperaturerhöhung und/oder einem Druckanstieg einhergeht, öffnen und das flammeninhibierende, -hemmende und/oder -löschende Mittel freigesetzt werden. Überraschenderweise können durch bereits kleine Mengen des flammeninhibierenden, -hemmenden und/oder - löschenden Mittel Verpuffungen und Brände verhindern werden, welche insbesondere bei einer mechanische Beschädigung des Batteriegehäuses oder bei inneren Kurzschlüssen durch das Austreten von brennbaren Flüssigkeiten oder Gasen ein Gefahrenherd sind. So kann vorteilhafterweise im Versagensfall einer oder mehrerer Zellen, beispielsweise bei einem Unfall eines elektrisch angetriebenen Fahrzeugs, einen Brand verhindert, gehemmt und gegebenenfalls zumindest teilweise gelöscht werden. Dadurch, dass das flammeninhibierende, - hemmende und/oder -löschende Mittel direkt nach dem Auftreten einer Gefahr eingesetzt wird können Flammen und Feuer besonders effektiv verhindert werden. Zudem ist aufgrund einer frühzeitigen Aktivierung eine deutlich geringere Menge des flammeninhibierenden, -hemmenden und/oder -löschenden Mittel nötig, weshalb dieses ohne die Einnahme von zusätzlichem Raum innerhalb des ansonsten üblicherweise in Batteriegehäuse vorliegenden freien, so genannten "toten", Volumen bereitgestellt werden kann. Dadurch, dass das flammeninhibierende, -hemmende und/oder -löschende Mittel erst im Bedarfsfall freigesetzt wird, können die Batteriegehäuse- und Zellenbauteile vor einer chemischen Langzeitwechselwirkung mit dem das flammeninhibierenden, -hemmenden und/oder -löschenden Mittel geschützt werden. Dadurch, dass das flammeninhibierende, -hemmende und/oder -löschende Mittel nicht dem Elektrolyten zugesetzt wird können zudem größere Mengen eingesetzt werden, welche sich somit nicht wie im Elektrolyten beziehungsweise innerhalb des Zellen negativ, beispielsweise auf die elektrische Leistungsfähigkeit und Lebensdauer der Zelle auswirken können. Insgesamt wird so vorteilhafterweise eine effektive, platzsparende und kostengünstige Lösung zur Verhinderung, Hemmung und/oder Bekämpfung von Bränden bereitgestellt und die Sicherheit von Menschen und Umwelt verbessert werden.

Unter einem mechanischen Schock kann beispielsweise ein, insbesondere abrupte, Änderung einer, ein Kraft auslösenden Zustandsgröße, beispielsweise der Beschleunigung beziehungsweise des Impulses, verstanden werden. Zum Beispiel kann ein mechanischer Schock im Fall eines Auffahrunfalls eines Fahrzeugs auftreten. Oft wird die Änderung innerhalb eines Zeitintervalls bewertet, zum Beispiel im Crashfall bei der Auslösung eines Airbags.

Die Spenderöffnung kann beispielsweise bei einem mechanischen Schock von mehr als 20 g, beispielsweise von mehr als 40 g, und/oder einer Temperaturerhöhung auf mehr als 80 °C und/oder einem Druckanstieg auf mehr als 2 bar öffenbar sein.

Eine galvanische Zelle weist erfindungsgemäß mindestens eine Ausbruchsstelle auf. Dabei ist es möglich, dass eine galvanische Zelle mehrere Ausbruchsstellen aufweist.

Eine Ausbruchsstelle ist erfindungsgemäß als Sollbruchstelle ausgeführt, welche beim Überschreiten eines Zelleninnendrucks, zum Beispiel von 8 bar, bricht beziehungsweise die Zelle öffnet.

Im Rahmen einer Ausführungsform ist der Spender zum Spenden einer Flüssigkeit, eines Schaums oder eines Feststoffs, insbesondere einer Flüssigkeit, ausgelegt. Eine Bevorratung von Flüssigkeiten, Schäumen und Feststoffen, insbesondere von Flüssigkeiten und Feststoffen, ist verglichen mit der Bevorratung von Gasen mit deutlich geringeren Wartungskosten verbunden, da deren Bevorratung im Gegensatz zu wegdiffundierenden Gasen deutlich einfacher sichergestellt werden kann.

Im Rahmen einer weiteren Ausführungsform ist die Spenderöffnung in Form einer Verdünnung der Wandung oder einer Fügenaht, beispielsweise einer Schweiß-, Fließ-, oder Klebenaht, in der Wandung des Spenders ausgeführt. Die bietet eine sehr einfache und kostengünstige Ausgestaltungsmöglichkeit für einen durch mechanischen Schock, Temperaturerhöhung und/oder Druckanstieg öffenbaren Spender.

Im Rahmen einer weiteren Ausführungsform ist der Spender zumindest im Bereich der Spenderöffnung teilweise oder vollständig aus einem organischen, beispielsweise polymeren und/oder wachsartigen, Material mit einem Schmelzpunkt in einem Bereich von ≥ 80 °C bis ≤ 200 °C, insbesondere von ≥ 90 °C bis ≤ 150 °C, beispielsweise von ≥ 95 °C bis ≤ 125 °C, ausgebildet. So kann auf einfache weise ein durch eine Temperaturerhöhung öffenbarer Spender realisiert werden.

Im Rahmen einer weiteren Ausführungsform ist der Spender zumindest im Bereich der Spenderöffnung teilweise oder vollständig aus einem Kunststoff ausgebildet. Insbesondere kann der Spender zumindest im Bereich der Spenderöffnung teilweise oder vollständig aus einem thermoplastischen Kunststoff ausgebildet sein. Beispielsweise kann der Spender zumindest um Bereich der Spenderöffnung teilweise oder vollständig aus einem Polyolefin, zum Beispiel Polyethylen (PE) und/oder Polypropylen (PP), ausgebildet sein. Kunststoffe lassen sich auf einfache und kostengünstige Weise formen. Zudem weisen Kunststoffe ein geringes Gewicht auf. Im Fall von Polyolefinen sind zudem die Materialkosten besonders gering. Polyolefine sind zudem vorteilhafterweise resistent gegen viel Chemikalien, insbesondere organische Lösungsmittel.

Im Rahmen einer weiteren Ausführungsform weist die Spenderöffnung einen Öffnungsmechanismus, beispielsweise ein Ventil, auf, durch welchen die Spenderöffnung automatisch öffenbar ist. Vorzugsweise ist der Öffnungsmechanismus - ähnlich einem Airbag - bei einer Erkennung eines Unfalls eines das Batteriegehäuse umfassenden Fahrzeugs auf der Basis von Crashsensordaten, zum Beispiel eines Beschleunigungssensors, des Fahrzeugs automatisch öffenbar ausgestaltet. Bei einem Einsatz des Batteriegehäuses im Automobilbereich kann ein Öffnen des Öffnungsmechanismus des Spenders vorteilhafterweise durch das gleiche Steuergerät und die gleichen Sensoren des Fahrzeugs veranlasst werden wie das Öffnen von Airbags.

Im Rahmen einer weiteren Ausführungsform ist der Spender ein Blasformkörper. Kunststoffe können besonders einfach und kostengünstig zu blasgeformt werden. Zudem ist es vorteilhafterweise möglich derartige Körper aus Glas zu formen. Glas weist vorteilhafterweise eine hohe Schock-Sensitivität auf. Zudem kann Glas eine hohe Drucksensitivität aufweisen. Glas ist zudem vorteilhafterweise kostengünstig und gegen viele Chemikalien resistent.

Im Rahmen einer weiteren Ausführungsform ist daher der Spender zumindest im Bereich der Spenderöffnung teilweise oder vollständig aus einem Glas ausgebildet. Um die Schock- und Drucksensitivität auf das gewünschte Maß einzustellen kann es jedoch vorteilhaft sein die übrigen Bereiche der Spenderwandung aus einem anderen, weniger schock- und drucksensitiven, Material auszubilden.

Im Rahmen einer weiteren Ausführungsform weist der Spender mehrere Spenderöffnungen auf. So können im Bedarfsfall mehrere Zellen und/oder mehrere Ausbruchsstellen mit dem flamminhibierenden, -hemmenden und/oder - löschenden Mittel versehen werden. Zudem bietet dies - für den Fall das nur eine oder wenige der dem Spender zugeordneten Zellen versagen - die Möglichkeit die wenigen Zellen mit der gesamten im Spender bevorrateten Menge an flamminhibierenden, -hemmenden und/oder - löschenden Mittel zu versehen und so einen Brand dieser Zellen besonders effektiv zu verhindern und gegebenenfalls zumindest teilweise zu bekämpfen. Erfindungsgemäß weisen die Zellen die Ausbruchstelle/n jeweils auf der Zellenoberseite auf. In dieser Ausgestaltung ist mindestens eine der Spenderöffnungen über den Ausbruchsstellen angeordnet. Ein derartiger Aufbau ist besonders effektiv zur Inhibierung, Hemmung und Bekämpfung von Flammen mit einer Flüssigkeit oder einem Feststoff.

Galvanische Zellen werden herkömmlicherweise zu Modulen verschaltet. Die Verschaltung kann dabei sowohl parallel als auch seriell erfolgen. Mehrere Module können wiederum zu einem so genannten Pack oder System verschaltet werden. Dabei können sowohl einzelne Module als auch Packs oder Systeme aus mehreren Modulen als Batterien verstanden werden.

Galvanische Zellen können beispielsweise zu Modulen aus mindestens zwei, insbesondere mindestens vier oder sechs oder acht, Zellen verschaltet werden. Dabei kann jede Zelle eine oder mehr Ausbruchsstellen aufweisen.

Im Rahmen einer weiteren Ausführungsform entspricht die Zahl der Spenderöffnungen eines Spenders der Zahl der Zellen, vorzugsweise der Ausbruchsstellen, eines Moduls aus mehreren verschalteten galvanischen Zellen. So kann durch einen einfachen und platzsparenden Aufbau die Sicherheit eines Moduls vorteilhafterweise verbessert werden.

Im Rahmen einer weiteren Ausführungsform ist der Spender zwischen den Polen einer galvanischen Zelle beziehungsweise eines Moduls aus mehreren galvanischen Zellen anordbar oder angeordnet. Der Bereich zwischen den Polen stellt bislang so genanntes "totes" also ungenutztes Volumen dar. Eine Ausgestaltung des Spenders für den Einsatz in diesem Bereich ist daher hinsichtlich der optimalen Raumausnutzung besonders vorteilhaft. Vorzugsweise nimmt der Spender dabei außer dem zwischen den Polen der Zelle/n zur Verfügung stehenden Raum keinen zusätzlichen Raum ein.

Im Rahmen einer weiteren Ausführungsform umfasst das flammeninhibierende, - hemmende und/oder -löschende Mittel mindestens einen Radikalfänger, zum Beispiel eine halogenierte oder nichthalogenierte, organische Verbindung, insbesondere auf Phosphorbasis, beispielsweise ausgewählt aus der Gruppe bestehend aus Alkyl- und/oder Arylphosphaten, wie Tris(2,2,2-trifluorethyl)phosphat, Trimethylphosphat, Triethylphosphat, cyclischen Phosphaten, zum Beispiel Cyclophosphacenen, wie Hexamethoxycyclotriphosphacen, Phosphiten, wie Tris(2,2,2-trifluorethyl)phosphit, fluorierten Alkylencarbonaten, wie fluoriertem Propylencarbonat, fluorierten Ethern, wie Methylnonafluorbutylether, und Kombinationen davon umfasst. Derartige flammeninhibierende beziehungsweise - hemmende Radikalfänger werden beispielsweise von Zhang et al. in Journal of Power Sources, 2006, 162, 1379-1394 als Elektrolytadditiv für Lithium-Ionen-Batterien sowie der darin zitierten Literatur beschrieben. Besonders gute Ergebnisse wurden mit fluorierten Spezies, wie tris(2,2,2 trifluorethyl)-Phosphat, erzielt.

Im Rahmen einer weiteren Ausführungsform umfasst das flammeninhibierende, - hemmende und/oder -löschende Mittel mindestens eine Erdalkaliverbindung, insbesondere Calciumverbindung. Erdalkaliionen, insbesondere Calciumionen, können vorteilhafterweise gegebenenfalls entstehenden Fluorwasserstoff in Form von schwer löslichen Erdalkalifluoriden, beispielsweise Calciumfluorid, binden. So kann vorteilhafterweise die Sicherheit von Menschen und Umwelt weiter verbessert werden.

Zudem kann das flammeninhibierende, -hemmende und/oder -löschende Mittel Wasser enthalten. Beispielsweise kann das flammeninhibierende, -hemmende und/oder -löschende Mittel eine wässrige erdalkalihaltige, insbesondere calciumhaltige, Lösung umfassen oder sein.

Weiterhin kann das Batteriegehäuse insbesondere noch elektrische Leitungen, beispielsweise zum Zusammenschalten von Zellen und/oder Modulen sowie zum Anschluss an eine Zellenüberwachungseinrichtung aufweisen. Im Fall einer Zellenüberwachungseinrichtung ist auch diese vorzugsweise in das Batteriegehäuse integriert. Zum Anschließen des Batteriegehäuses an einen Verbraucher und/oder zum Zusammenschalten von mehreren Batteriegehäuse umfasst das Batteriegehäuse weiterhin vorzugsweise einen oder mehrere Stecker, beispielsweise Hochvoltstecker. Weiterhin kann das Batteriegehäuse Kühlmittelleitungsanschlüsse sowie Kühlmittelleitungen zur Kühlung der galvanischen Zellen aufweisen. Weiterhin kann das Batteriegehäuse eine oder mehrere Fixiereinrichtungen zur Montage des Batteriegehäuses in einem System, beispielsweise in einem Fahrzeug oder einem stationären Energieversorgungssystem, umfassen.

Hinsichtlich weiterer Vorteile und Merkmale wird hiermit explizit auf die Erläuterungen im Zusammenhang mit dem erfindungsgemäßen Spender, der erfindungsgemäßen galvanischen Zelle, der erfindungsgemäßen Batterie sowie den Figuren verwiesen.

Ein weiterer Gegenstand der vorliegenden Erfindung ist ein Spender zum Spenden eines flammeninhibierenden, -hemmenden und/oder -löschendes, insbesondere flüssigen, festen oder schaumförmigen, Mittels zur Brandinhibition, - hemmung und/oder -löschung einer oder mehrerer Lithium-Ionen-Zellen, deren Oberseite/n mit mindestens einer im Versagensfall der Zelle öffenbaren Ausbruchsstelle ausgestattet sind, wobei der Spender mindestens eine zu einer Ausbruchsstelle einer Zelle benachbart anordbare, öffenbare Spenderöffnung aufweist, wobei die Spenderöffnung bei einem mechanischen Schock und/oder einer Temperaturerhöhung und/oder einem Druckanstieg oberhalb eines vorbestimmten Grenzwertes öffenbar ist, insbesondere wobei der Spender zwischen den Polen einer galvanischen Zelle beziehungsweise eines Moduls aus mehreren galvanischen Zellen anordbar ist, ohne dabei außer dem zwischen den Polen der Zelle/n zur Verfügung stehenden Raum zusätzlichen Raum einzunehmen.

Hinsichtlich weiterer Vorteile und Merkmale wird hiermit explizit auf die Erläuterungen im Zusammenhang mit dem erfindungsgemäßen Batteriegehäuse, der erfindungsgemäßen galvanischen Zelle, der erfindungsgemäßen Batterie sowie den Figuren verwiesen.

Ein weiterer Gegenstand der vorliegenden Erfindung ist eine galvanische Zelle, insbesondere Lithium-Ionen-Zelle, wobei die Zelle auf der Zellenoberseite mindestens eine im Versagensfall der Zelle öffenbare Ausbruchstelle aufweist, wobei die Ausbruchsstelle in einem bezüglich der Hauptfläche der Zellenoberseite vertieften Abschnitt ausgebildet ist. Eine derartig ausgestaltete galvanische Zelle ist für das erfindungsgemäße Konzept besonders gut geeignet, da sich ein aus einem über der Ausbruchsstelle angeordneten Spender abgegebenes flammeninhibierendes, -hemmendes und/oder -löschendes, insbesondere flüssiges, festes oder schaumförmiges, Mittel in der Vertiefung ansammeln kann und so einen Brand besonders gut verhindern, hemmen oder sogar bekämpfen kann.

Hinsichtlich weiterer Vorteile und Merkmale wird hiermit explizit auf die Erläuterungen im Zusammenhang mit dem erfindungsgemäßen Batteriegehäuse, dem erfindungsgemäßen Spender, der erfindungsgemäßen Batterie sowie den Figuren verwiesen.

Ein weiterer Gegenstand der vorliegenden Erfindung ist eine Batterie, insbesondere eine Lithium-Ionen-Batterie, welche ein erfindungsgemäßes Batteriegehäuse und/oder einen erfindungsgemäßen Spender und/oder eine erfindungsgemäße galvanischen Zelle umfasst. Vorzugsweise ist dabei mindestens eine Spenderöffnung über den Zellen, besonders bevorzugt über den Ausbruchsstellen, angeordnet, insbesondere wobei die Zahl der Spenderöffnungen der Zahl der Zellen, besonders bevorzugt der Ausbruchsstellen, entspricht.

Hinsichtlich weiterer Vorteile und Merkmale wird hiermit explizit auf die Erläuterungen im Zusammenhang mit dem erfindungsgemäßen Batteriegehäuse, dem erfindungsgemäßen Spender, der erfindungsgemäßen galvanischen Zelle sowie den Figuren verwiesen.

### Zeichnungen und Beispiele

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: einen schematischen Querschnitt durch eine Ausführungsform einer erfindungsgemäßen Batterie parallel zu den Seitenflächen der galvanischen Zellen;
- Fig. 2a: einen schematischen Querschnitt durch eine erste Ausgestaltung der in Fig. 1 gezeigten Ausführungsform einer erfindungsgemäßen Batterie senkrecht zu den Seitenflächen der galvanischen Zellen, in der pro Zelle ein Spender vorgesehen ist; und
- Fig. 2b: einen schematischen Querschnitt durch eine zweite Ausgestaltung der in Fig. 1 gezeigten Ausführungsform einer erfindungsgemäßen Batterie senkrecht zu den Seitenflächen der galvanischen Zellen, in der pro Modul ein Spender vorgesehen ist.

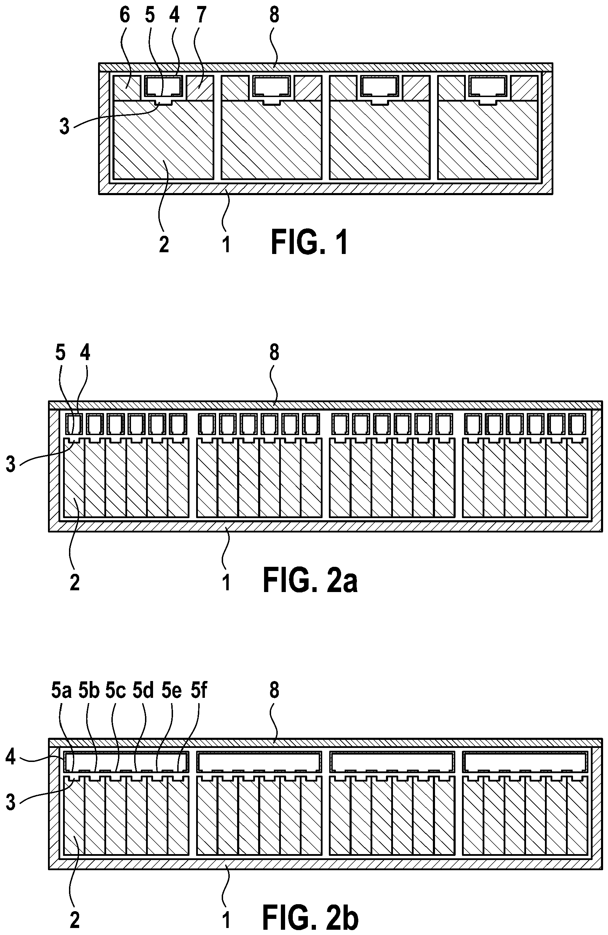

Die Figuren 1, 2a und 2b zeigen ein Batteriegehäuse 1 in dessen Innenraum sechzehn Module aus jeweils sechs galvanischen Zellen 2, insbesondere Lithium-Ionen-Zellen, angeordnet sind. Die Figuren veranschaulichen, dass die Zellen 2 jeweils mit einer im Versagensfall der Zelle 2 öffenbaren Ausbruchsstelle 3 ausgestattet sind. Im Rahmen der gezeigten Ausführungsformen sind die Ausbruchsstellen 3 in einem bezüglich der Hauptfläche der Zellenoberseite vertieften Abschnitt ausgebildet. Die Figuren zeigen weiterhin, dass der Innenraum des Batteriegehäuse 1 zudem Spender 4 zum Spenden eines flammeninhibierenden, -hemmenden und/oder -löschenden, flüssigen, festen oder schaumförmigen Mittels aufweist, welche zu einer Ausbruchsstelle 3 einer Zelle 2 benachbart angeordnete, öffenbare Spenderöffnungen 5; 5a, 5b, 5c, 5d, 5e, 5f aufweisen.

Erfindungsgemäß sind diese Spenderöffnungen 5; 5a, 5b, 5c, 5d, 5e, 5f bei einem mechanischen Schock und/oder einer Temperaturerhöhung und/oder einem Druckanstieg oberhalb eines vorbestimmten Grenzwertes öffenbar ausgestaltet.

Im Rahmen der gezeigten Ausführungsformen sind die Spenderöffnungen 5; 5a, 5b, 5c, 5d, 5e, 5f in Form einer Verdünnung der Wandung des Spenders 4 ausgeführt. Dabei kann der Spender 4 zumindest im Bereich der Spenderöffnung 5; 5a, 5b, 5c, 5d, 5e, 5f teilweise oder vollständig aus einem organischen, beispielsweise polymeren und/oder wachsartigen, oder anorganischen, beispielsweise glasförmigen, Material ausgebildet sein, um ein Öffnen der Spenderöffnung 5; 5a, 5b, 5c, 5d, 5e, 5f bei einem mechanischen Schock und/oder einer Temperaturerhöhung und/oder einem Druckanstieg zu gewährleisten. Alternativ dazu können die Spenderöffnungen 5; 5a, 5b, 5c, 5d, 5e, 5f einen Öffnungsmechanismus, beispielsweise ein Ventil, aufweisen, durch welchen die Spenderöffnung 5; 5a, 5b, 5c, 5d, 5e, 5f automatisch öffenbar ist (nicht dargestellt). Eine Öffnung eines derartigen Öffnungsmechanismus kann zum Beispiel bei einer Erkennung eines Unfalls eines das Batteriegehäuse 1 umfassenden Fahrzeugs auf der Basis von Crashsensordaten, zum Beispiel eines Beschleunigungssensors, des Fahrzeugs automatisch erfolgen.

Im Rahmen der gezeigten Ausführungsformen weisen die Zellen 2 die Ausbruchstellen 3 jeweils auf der Zellenoberseite auf, wobei jeweils über einer Ausbruchsstelle 3 eine Spenderöffnung 5; 5a, 5b, 5c, 5d, 5e, 5f angeordnet ist. Im Bedarfsfall kann so das flammeninhibierende, -hemmende und/oder -löschende Mittel aus dem Spender 4 auf die Ausbruchsstellen 3 gegeben werden und sich in den Vertiefungen ansammeln.

Im Rahmen der gezeigten Ausführungsformen sind die Spender 4 jeweils zwischen den Polen 6,7 der galvanischen Zelle 2 angeordnet.

Figur 2a zeigt, dass dabei jede Zelle 2 einen Spender 4 aufweisen kann, wobei jeweils die Spenderöffnung 5 eines Spenders 4 über einer Ausbruchsstelle 3 einer Zelle 2 angeordnet ist.

Figur 2b veranschaulicht, dass es jedoch ebenso möglich ist, dass ein Spender 4 mehreren Zellen 2, beispielsweise eines Moduls zugeordnet ist, wobei der dem Modul zugeordnete Spender 4 zwischen den Polen 6,7 der Zellen 2 eines Moduls angeordnet sein kann. Figur 2b veranschaulicht zudem, dass ein Spender 4 mehrere Spenderöffnungen 5a, 5b, 5c, 5d, 5e, 5f aufweisen kann. Figur 2b zeigt, dass dabei jeweils eine Spenderöffnung 5a, 5b, 5c, 5d, 5e, 5f über einer Ausbruchsstelle 3 einer Zelle 2 eines Moduls aus mehreren verschalteten galvanischen Zellen 2 angeordnet sein kann, insbesondere wobei die Zahl der Spenderöffnungen 5a, 5b, 5c, 5d, 5e, 5f des Spenders 4 der Zahl der Zellen 2, insbesondere der Ausbruchsstelle 3, des Moduls entspricht.

Im Rahmen der gezeigten Ausführungsformen nehmen die Spender 4 vorteilhafterweise außer dem zwischen den Polen 6,7 der Zellen 2 zur Verfügung stehenden Raum keinen zusätzlichen Raum ein.

Die Figuren 1, 2a und 2b veranschaulichen ferner, dass das Batteriegehäuse 1 ein Grundgehäuse aufweisen kann, in welchem der Innenraum zur Aufnahme der galvanischen Zellen 2 ausgebildet ist, wobei das Grundgehäuse beziehungsweise der Innenraum des Grundgehäuses mit einem Gehäusedeckel 8 verschließbar ist.

## Patentansprüche

1. Batterie, insbesondere Lithium-Ionen-Batterie, umfassend ein Batteriegehäuse (1) mit einem Innenraum zur Aufnahme von galvanischen Zellen (2), insbesondere Lithium-Ionen-Zellen, welche auf der Zellenoberseite jeweils mit mindestens einer im Versagensfall der Zelle (2) öffenbaren Ausbruchsstelle (3) ausgestattet sind, wobei der Innenraum des Batteriegehäuse (1) mindestens einen Spender (4) zum Spenden eines flammeninhibierenden, -hemmenden und/oder -löschenden Mittels aufweist, wobei der Spender (4) mindestens eine zu einer Ausbruchsstelle (3) einer Zelle (2) benachbart angeordnete, öffenbare Spenderöffnung (5;5a,5b,5c,5d,5e,5f) aufweist, wobei die Spenderöffnung (5;5a,5b,5c,5d,5e,5f) bei einem mechanischen Schock und/oder einer Temperaturerhöhung und/oder einem Druckanstieg oberhalb eines vorbestimmten Grenzwertes öffenbar ist, **dadurch gekennzeichnet dass** mindestens eine Spenderöffnung (5) über einer Ausbruchsstelle (3) angeordnet ist, wobei die Ausbruchstelle als Sollbruchstelle ausgeführt ist, die beim Überschreiten eines Zelleninnendrucks die galvanische Zelle (2) öffnet.

2. Batterie nach Anspruch 1, wobei der Spender (4) zum Spenden einer Flüssigkeit, eines Schaums oder eines Feststoffs, insbesondere einer Flüssigkeit, ausgelegt ist.

3. Batterie nach Anspruch 1 oder 2, wobei die Spenderöffnung (5;5a,5b,5c,5d,5e,5f) in Form einer Verdünnung der Wandung oder einer Fügenaht, beispielsweise einer Schweiß-, Fließ-, oder Klebenaht, in der Wandung des Spenders (4) ausgeführt ist.

4. Batterie nach einem der Ansprüche 1 bis 3, wobei der Spender (4) zumindest im Bereich der Spenderöffnung (5;5a,5b,5c,5d,5e,5f) teilweise oder vollständig aus einem organischen, beispielsweise polymeren und/oder wachsartigen, Material mit einem Schmelzpunkt in einem Bereich von ≥ 80 °C bis ≤ 200 °C ausgebildet ist.

5. Batterie nach einem der Ansprüche 1 bis 4, wobei der Spender (4) zumindest im Bereich der Spenderöffnung (5;5a,5b,5c,5d,5e,5f) teilweise oder vollständig aus einem Kunststoff, insbesondere einem thermoplastischen Kunststoff, beispielsweise aus einem Polyolefin, zum Beispiel Polyethylen und/oder Polypropylen, ausgebildet ist.

6. Batterie nach Anspruch 1 oder 2, wobei die Spenderöffnung (5;5a,5b,5c,5d,5e,5f) einen Öffnungsmechanismus, beispielsweise ein Ventil, aufweist, durch welchen die Spenderöffnung (5;5a,5b,5c,5d,5e,5f) automatisch öffenbar ist, insbesondere wobei der Öffnungsmechanismus bei einer Erkennung eines Unfalls eines das Batteriegehäuse (1) umfassenden Fahrzeugs auf der Basis von Crashsensordaten, zum Beispiel eines Beschleunigungssensors, des Fahrzeugs automatisch öffenbar ist.

7. Batterie nach einem der Ansprüche 1 bis 6, wobei der Spender (4) ein Blasformkörper ist.

8. Batterie nach einem der Ansprüche 1 bis 7, wobei der Spender (4) zumindest im Bereich der Spenderöffnung (5;5a,5b,5c,5d,5e,5f) teilweise oder vollständig aus einem Glas ausgebildet ist.

9. Batterie nach einem der Ansprüche 1 bis 8, wobei der Spender (4) mehrere Spenderöffnungen (5;5a,5b,5c,5d,5e,5f) aufweist, insbesondere wobei die Zahl der Spenderöffnungen (5;5a,5b,5c,5d,5e,5f) eines Spenders (4) der Zahl der Zellen (2), insbesondere der Ausbruchsstellen (3), eines Moduls aus mehreren verschalteten galvanischen Zellen (2) entspricht.

10. Batterie nach einem der Ansprüche 1 bis 9, wobei der Spender (4) zwischen den Polen (6,7) einer galvanischen Zelle (2) oder eines Moduls aus mehreren galvanischen Zellen (2) anordbar oder angeordnet ist, insbesondere wobei der Spender (4) außer dem zwischen den Polen (6,7) der Zelle/n (2) zur Verfügung stehenden Raum keinen zusätzlichen Raum einnimmt.

11. Batterie nach einem der Ansprüche 1 bis 10, wobei das flammeninhibierende, -hemmende und/oder -löschende Mittel
mindestens ein eine Erdalkaliverbindung, insbesondere Calciumverbindung, und/oder
mindestens eine halogenierte oder nichthalogenierte, organische Verbindung, insbesondere auf Phosphorbasis, umfasst, beispielsweise welche ausgewählt ist aus der Gruppe, bestehend aus Alkyl- und/oder Arylphosphaten, wie Tris(2,2,2-trifluorethyl)phosphat, Trimethylphosphat, Triethylphosphat, cyclischen Phosphaten, zum Beispiel Cyclophosphacenen, wie Hexamethoxycyclotriphosphacen, Phosphiten, wie Tris(2,2,2-trifluorethyl)phosphit, fluorierten Alkylencarbonaten, wie fluoriertem Propylencarbonat, fluorierten Ethern, wie Methylnonafluorbutylether, und Kombinationen davon.

## Claims

1. Battery, in particular lithium-ion battery, comprising a battery housing (1) comprising an inner chamber for accommodating galvanic cells (2), in particular lithium-ion cells, which are provided on each of their cell upper sides with at least one cut-out area (3) which can be opened in the event of failure of the cell (2), wherein the interior of the battery housing (1) has at least one dispenser (4) for dispensing a flame-inhibiting, flame-retarding and/or flame-extinguishing agent, wherein the dispenser (4) has at least one dispenser opening (5; 5a, 5b, 5c, 5d, 5e, 5f) which is arranged adjacent to a cut-out area (3) of a cell (2) and can be opened, wherein the dispenser opening (5; 5a, 5b, 5c, 5d, 5e, 5f) can be opened in the event of a mechanical shock and/or an increase in temperature and/or a pressure increase above a predetermined limiting value, **characterized in that** at least one dispenser opening (5) is arranged over a cut-out area (3), wherein the cut-out area is embodied as a predetermined break point which opens the galvanic cell (2) when a cell internal pressure is exceeded.

2. Battery according to Claim 1, wherein the dispenser (4) is configured to dispense a liquid, a foam or a solid, in particular a liquid.

3. Battery according to Claim 1 or 2, wherein the dispenser opening (5; 5a, 5b, 5c, 5d, 5e, 5f) is embodied in the form of a thinning of the wall or a joint seam, for example, a weld seam, flow line or joint, is formed in the wall of the dispenser (4) .

4. Battery according to one of Claims 1 to 3, wherein the dispenser (4) is formed, at least in the region of the dispenser opening (5; 5a, 5b, 5c, 5d, 5e, 5f), partially or completely from an organic, for example polymer and/or wax-like, material with a melting point in a range from ≥ 80°C to ≤ 200°C.

5. Battery according to one of Claims 1 to 4, wherein the dispenser (4) is formed, at least in the region of the dispenser opening (5; 5a, 5b, 5c, 5d, 5e, 5f), partially or completely from a plastic, in particular a thermoplast, for example from a polyolefin, for example polyethylene and/or polypropylene.

6. Battery according to Claim 1 or 2, wherein the dispenser opening (5; 5a, 5b, 5c, 5d, 5e, 5f) has an opening mechanism, for example a valve, by means of which the dispenser opening (5; 5a, 5b, 5c, 5d, 5e, 5f) can be opened automatically, in particular wherein, when an accident of a vehicle comprising the battery housing (1) is detected, the opening mechanism can be opened on the basis of crash sensor data, for example of an acceleration sensor, of the vehicle.

7. Battery according to one of Claims 1 to 6, wherein the dispenser (4) is a blow-molded body.

8. Battery according to one of Claims 1 to 7, wherein the dispenser (4) is formed partially or completely from a glass, at least in the region of the dispenser opening (5; 5a, 5b, 5c, 5d, 5e, 5f).

9. Battery according to one of Claims 1 to 8, wherein the dispenser (4) has a plurality of dispenser openings (5; 5a, 5b, 5c, 5d, 5e, 5f), in particular wherein the number of dispenser openings (5; 5a, 5b, 5c, 5d, 5e, 5f) of a dispenser (4) corresponds to the number of cells (2), in particular the cut-out areas (3) of a module composed of a plurality of connected galvanic cells (2).

10. Battery according to one of Claims 1 to 9, wherein the dispenser (4) can be arranged or is arranged between the poles (6, 7) of a galvanic cell (2) or of a module composed of a plurality of galvanic cells (2), in particular wherein the dispenser (4) does not take up any additional space apart from the space available between the poles (6, 7) of the cell or cells (2).

11. Battery according to one of Claims 1 to 10, wherein the flame-inhibiting, flame-retarding and/or flame-extinguishing agent comprises at least one alkaline earth compound, in particular calcium compound,
and/or
at least one halogenated or non-halogenated organic compound, in particular based on phosphorus, for example which is selected from the group composed of alkyl phosphates and/or arylphosphates such as tris(2,2,2-trifluoroethyl)phosphate, trimethylphosphate, triethylphosphate, cyclic phosphates, for example cyclophosphacenes such as hexamethoxycyclotriphosphacenes, phosphites such as tris(2,2,2-trifluoroethyl)phosphite, fluorinated alkylene carbonates such as fluorinated propylene carbonate, fluorinated ethers such as methylnonafluorobutylether, and combinations thereof.

## Revendications

1. Batterie, en particulier batterie lithium-ion, comprenant un boîtier de batterie (1) avec un espace intérieur destiné à recevoir des cellules (2) galvaniques, en particulier des cellules lithium-ion, qui sont équipées, sur le côté supérieur de cellules, respectivement d'au moins un emplacement de percement (3) pouvant être ouvert en cas de défaillance de la cellule (2), l'espace intérieur du boîtier de batterie (1) présentant au moins un distributeur (4) destiné à distribuer un produit exerçant sur les flammes un effet d'inhibition, de retardement et/ou d'extinction, le distributeur (4) présentant un orifice de distributeur (5 ; 5a, 5b, 5c, 5d, 5e, 5f) pouvant être ouvert, disposé au voisinage d'un emplacement de percement (3) d'une cellule (2), l'orifice de distributeur (5 ; 5a, 5b, 5c, 5d, 5e, 5f) pouvant être ouvert en cas de choc mécanique et/ou d'augmentation de température et/ou d'augmentation de pression au-dessus d'une valeur limite prédéfinie, **caractérisée en ce qu'**au moins un orifice de distributeur (5) est disposé au-dessus d'un emplacement de percement (3), l'emplacement de percement étant réalisé en tant qu'emplacement de rupture programmé qui ouvre la cellule (2) galvanique en cas de dépassement d'une pression intérieure de cellule.

2. Batterie selon la revendication 1, le distributeur (4) étant conçu pour distribuer un liquide, une mousse ou une matière solide, en particulier un liquide.

3. Batterie selon la revendication 1 ou 2, l'orifice de distributeur (5 ; 5a, 5b, 5c, 5d, 5e, 5f) étant réalisé sous la forme d'un amincissement de la paroi ou d'un cordon d'assemblage, par exemple d'un cordon de soudage, de fluage ou de collage, dans la paroi du distributeur (4).

4. Batterie selon l'une des revendications 1 à 3, le distributeur (4) étant, au moins dans la zone de l'orifice de distributeur (5 ; 5a, 5b, 5c, 5d, 5e, 5f), formé partiellement ou complètement d'un matériau organique, par exemple polymère et/ou cireux, avec un point de fusion dans une plage de ≥ 80 °C à ≤ 200 °C.

5. Batterie selon l'une des revendications 1 à 4, le distributeur (4) étant, au moins dans la zone de l'orifice de distributeur (5 ; 5a, 5b, 5c, 5d, 5e, 5f), formé partiellement ou complètement d'une matière plastique, en particulier d'une matière thermoplastique, par exemple d'une polyoléfine, par exemple du polyéthylène et/ou du polypropylène.

6. Batterie selon la revendication 1 ou 2, l'orifice de distributeur (5 ; 5a, 5b, 5c, 5d, 5e, 5f) présentant un mécanisme d'ouverture, par exemple une vanne, par lequel l'orifice de distributeur (5 ; 5a, 5b, 5c, 5d, 5e, 5f) peut être ouvert automatiquement, le mécanisme d'ouverture en particulier pouvant être ouvert automatiquement en cas de détection d'un accident d'un véhicule comprenant le boîtier de batterie (1) sur la base de données de capteur de collision, par exemple d'un capteur d'accélération, du véhicule.

7. Batterie selon l'une des revendications 1 à 6, le distributeur (4) étant un corps moulé par soufflage.

8. Batterie selon l'une des revendications 1 à 7, le distributeur (4) étant partiellement ou complètement constitué de verre au moins dans la zone de l'orifice de distributeur (5 ; 5a, 5b, 5c, 5d, 5e, 5f).

9. Batterie selon l'une des revendications 1 à 8, le distributeur (4) présentant plusieurs orifices de distributeur (5 ; 5a, 5b, 5c, 5d, 5e, 5f), en particulier le nombre d'orifices de distributeur (5 ; 5a, 5b, 5c, 5d, 5e, 5f) d'un distributeur (4) correspondant au nombre de cellules (2), en particulier d'emplacements de percement (3), d'un module de plusieurs cellules (2) galvaniques interconnectées.

10. Batterie selon l'une des revendications 1 à 9, le distributeur (4) pouvant être disposé ou étant disposé entre les pôles (6, 7) d'une cellule (2) galvanique ou d'un module de plusieurs cellules (2) galvaniques, le distributeur (4) n'occupant en particulier pas de place supplémentaire en dehors de l'espace disponible entre les pôles (6, 7) de la/des cellule(s) (2).

11. Batterie selon l'une des revendications 1 à 10, le produit exerçant sur les flammes un effet d'inhibition, de retardement et/ou d'extinction comprenant au moins un composé alcalinoterreux, en particulier un composé de calcium,
et/ou
au moins un composé organique halogéné ou non halogéné, en particulier à base de phosphore, qui est par exemple sélectionné dans le groupe composé de phosphates d'alkyle et/ou d'aryle, tels que tris(2,2,2-trifluoroéthyl)phosphate, phosphate de triméthyle, phosphate de triéthyle, phosphates cycliques, par exemple des cyclophosphacènes, tels que hexaméthoxycyclotriphosphacène, phosphites, tels que tris(2,2,2-trifluoroéthyl)phosphite, carbonates d'alkylène fluorés, tels que carbonate de propylène fluoré, éthers fluorés, tels que méthylnonafluorobutyléther, et des combinaisons de ceux-ci.
